# EUROPEAN PATENT SPECIFICATION

(11) **EP 4 324 181 B1**
(45) Date of publication and mention of the grant of the patent: **31.12.2025**
(21) Application number: 21733400.2
(22) Date of filing: 10.06.2021
(51) Int. Cl.: H04L 67/1097, G06F 15/173

(54) **NETWORK INTERFACE CARD FOR CACHING FILE-SYSTEM INTERNAL STRUCTURES**
NETZWERKSCHNITTSTELLENKARTE ZUM CACHEN VON DATEISYSTEM-INTERNEN STRUKTUREN
CARTE D'INTERFACE RÉSEAU POUR LA MISE EN CACHE DES STRUCTURES INTERNES D'UN SYSTÈME DE FICHIERS

(43) Date of publication of application: 21.02.2024
(73) Proprietor: Huawei Technologies Co., Ltd., Shenzhen, Guangdong 518129 (CN)
(72) Inventor: ZANYOVKA, Shuki, 80992 Munich (DE); MARGOLIN, Alex, 80992 Munich (DE)
(74) Representative: Maiwald GmbH
(86) International application number: PCT/EP2021/065657
(87) International publication number: WO 2022/258188

(56) References cited:
- US-B1- 9 088 592
- RECIO R ET AL: "Request for Comments (RFC) 5040: A Remote Direct Memory Access Protocol Specification", NETWORK WORKING GROUP, CATEGORY: STANDARDS TRACK, 1 October 2007 (2007-10-01), XP055799513, Retrieved from the Internet <URL:https://tools.ietf.org/pdf/rfc5040.pdf> [retrieved on 20210428]

## Description

### BACKGROUND

The present disclosure, in some embodiments thereof, relates to transfer of data over a network and, more specifically, but not exclusively, to a network interface card, systems, and methods, for transferring data over a network between computing devices.

US9088592B1 describes that a network host includes a specialized network interface that not only processes TCP but also parses received network file system headers, identifying those headers within the TCP data stream, separating them from any corresponding network file system data, and providing them separately from that data to the network file system of the host for processing as a batch, all without any interrupt to the host. It is described that similarly, the network file system of the host may communicate directly with the network interface by writing network file system headers directly to a register of the network interface to transmit data. Computing devices may establish network connections with one another for remotely transferring data between them over a network. Such remote data transfers incur delays. Development such as Remote Direct Memory Access (RDMA) have been designed to reduce the delays and Network File System (NFS) have been design to provide file-system services over the network.

### SUMMARY

It is an object of the present invention to provide network interface card (NIC), a computing device, a system, a computer program product, and a method for data transfer across a network between a host and a network node.

The foregoing and other objects are achieved by the features of the independent claims. Further implementation forms are apparent from the dependent claims, the description and the figures.

Appended claim 1 defines a network interface card of a host for data transfer across a network. Appended claim 12 defines a processor of a network node for data transfer across a network to a host. Appended claim 14 defines a method for data transfer across a network by a network interface card, NIC, of a host. The invention and its scope of protection is defined by these independent claims. The following aspects and implementations of the summary provide examples of how technical subject matters can be combined.

According to a first aspect, a network interface card (NIC) of a host for data transfer across a network, comprises: a memory for caching file-system internal structures of the host for management of data stored on a non-volatile data storage device of the host, processing circuitry configured for: receiving a packet from a network node, extracting from the packet, a request for data transfer across the network between the non-volatile data storage device of the host defined by the file-system and the network node, and executing the request for transferring data across the network between the network node and the non-volatile data storage device of the host according to the file-system internal structures which are stored in the memory of the NIC.

According to a second aspect, a processor of a network node for data transfer across a network to a host, is configured for: generating a packet including a request to perform an operation on data stored on a non-volatile data storage device of the host by processing circuitry of a NIC of the host according to a file storage system of the host cached on the memory of the NIC, and sending the packet including the request to the NIC of the host for execution by the processing circuity of the NIC of the host.

According to a third aspect, a method for data transfer across a network by a network interface card (NIC) of a host, comprises: receiving a packet from a network node, extracting from the packet, a request for data transfer across the network between a non-volatile data storage device of the host defined by a file-system for management of data stored on a non-volatile data storage device of the host, and the network node, wherein the file-system internal structures of a non-volatile data storage device installed on the host system bus is cached on a memory which is local to the NIC, and executing the request for transferring data across the network between the network node and the non-volatile data storage device of the host according to the file-system internal structures stored in the memory of the NIC.

According to a fourth aspect, A method for data transfer across a network from a network node to a host, comprises: generating a packet including a request to perform an operation on data stored on a non-volatile data storage device of the host by processing circuitry of a NIC of the host according to a file storage system of the host cached on the memory of the NIC, and sending the packet including the request to the NIC of the host for execution by the processing circuity of the NIC of the host.

Latency of the data transfer between the remote network node and the non-volatile data storage device of the host is reduced by storing the file system internal structures of the host on the memory of the NIC.

In a further implementation form of the first, second, third, and fourth aspects, the request performed by the processing circuitry of the NIC comprises an operation command indicating at least one of: (i) directly reading data from a file on the file-system over the non-volatile data storage device installed on the host, and sending the read data to the network node over the network, and (ii) receiving data from the network node sent over the network, and directly writing the received data to a file on the file-system over the non-volatile data storage device installed on the host.

Caching the file system internal structures in the memory of the NIC enables using the NIC as a bridge to the file system, which does not require that that the remote network node know pointers to the memory address, enabling implementation of low latency and/or high performance data transfers over the network.

In a further implementation form of the first, second, third, and fourth aspects, the request for data transfer across the network indicates file granularity.

The request enables remote access by file granularity rather than memory granularity.

In a further implementation form of the first, second, third, and fourth aspects, the request comprises instructions for remotely performing an operation on a file stored on the non-volatile data storage device of the host, the request selected from a group consisting of: file open, file close, read file, write file, and file seek via a file-system interface.

Operations may be directly and remotely performed by the network node on the non-volatile data storage device of the host.

In a further implementation form of the first, second, third, and fourth aspects, the transferring of the data is performed by the processing circuitry and excluding processing by a central processing unit (CPU) of the host.

The host CPU is not involved in file-system operations, which increases efficiency of the host CPU.

In a further implementation form of the first, second, third, and fourth aspects, the processing circuitry is further configured to perform an initiation process of the file-system, by mounting the file-system of the host stored on the non-volatile data storage device installed on the host and caching internal structures of the file-system including file-allocation data structures on the memory of the NIC.

The complete file system is obtained by the processing circuitry of the NIC and locally stored on the memory of the NIC, enabling direct read/write to the non-volatile storage of the host without the CPU of the host.

In a further implementation form of the first, second, third, and fourth aspects, following the initialization process, the processing circuitry of the NIC manages the file-system of the host and services read and write requests by other nodes on the network, wherein access to the file-system of the host is blocked following the initialization process.

The host CPU blocks the file-system write-access following initialization to prevent access collisions.

In a further implementation form of the first, second, third, and fourth aspects, the processing circuitry is configured for analyzing the file-system internal structures cached on the memory of the NIC to find a location on the non-volatile data storage device of the host for servicing the request including read from a file and/or writing into a file.

Using the new SWRs and the file system internal structures stored on the memory of the NIC absolves the network node of the previous requirement to know the address of the data.

In a further implementation form of the first, second, third, and fourth aspects, the file-system is analyzed for at least one of: allocating an amount of space for writing data received from the network node on the non-volatile data storage device, and fetching a physical address of the file with offset over the non-volatile data storage device for reading/writing data, servicing the request.

Analyzing the file system by the processing circuitry of the NIC rather than using the CPU of the host and the file system internal structures stored on the non-volatile memory of the host, reduces latency otherwise incurred by using the CPU of the host, and/or improves performance of the CPU of the host by off-loading the analysis task to the processing circuitry of the NIC.

In a further implementation form of the first, second, third, and fourth aspects, the data transfer across the network is according to at least one of: Remote Direct Memory Access, RDMA, protocol, and a network file-system (NFS) protocol.

Standard RDMA is extended, by providing the capability to directly perform data transfer between the remote network node and the non-volatile data storage device of the host.

In a further implementation form of the first, second, third, and fourth aspects, the request indicates a new SWR (Send Work Request) opcode.

The new SWR opcode may be simple RDMA SWR opcodes which are provided to the remote network node. The remote network node doesn't need to save a complex remote memory context. Offsets are not required.

In a further implementation form of the first, second, third, and fourth aspects, the new SWR opcode is selected from a group consisting of: fopen() maps to RDMA_SWR_REMOTE_FOPEN [opcode<7-0>=00011000], fclose() maps to RDMA_SWR_REMOTE_FCLOSE [opcode<7-0>=00011001], readv() maps to RDMA_SWR_REMOTE_READV, [opcode<7-0>=00011010], writev() maps to RDMA_SWR_REMOTE_WRITEV [opcode<7-0>=00011011], fseek() maps to RDMA_SWR_REMOTE_FSEEK [opcode<7-0>=00011100].

In a further implementation form of the first, second, third, and fourth aspects, the request defines a new reliable connection RDMA send work request (SWR) for providing POSIX file functionality to the network node for directly and remotely performing on the host.

The new RDMA protocol SWRs can improve high performance computing (HPC) applications file-systems access latency significantly.

In a further implementation form of the first, second, third, and fourth aspects, the request indicates instructions to open a file on the non-volatile data storage device of the host, wherein the packet includes a filename field indicating a filename of the file to open, a path field indicating a path of the file to open, wherein in response to executing the request, the processing circuitry is configured to provide a response packet to the network node indicating a handle of the opened file.

In a further implementation form of the first, second, third, and fourth aspects, the packet further includes a data field indicating encoding of parameters of the POSIX fopen() operation similar to the NFS protocol.

In a further implementation form of the first, second, third, and fourth aspects, the request indicates instructions to read a file and/or write a file, on the non-volatile data storage device of the host, wherein the packet includes a remote file handle indicating a handle of the file, and a memory key field indicating memory offset of the file, wherein the non-volatile data storage device is mapped to a certain address in physical memory of the host, wherein the processing circuitry is configured for computing a destination physical address for reading and/or writing the file is computed by: setting a file base offset value of the file in the non-volatile data storage device of the host, obtained by scanning the file-system internal data structures which are cached in the memory of the NIC according to the handle of the file and the memory offset of the file in the packet, obtaining an offset value set by an application on the network node that sent the packet, computing a destination physical address of the requested file data on the non-volatile data storage device by using the equation: destination virtual address - base virtual address + base physical address + the offset value, and writing to and/or reading from the non-volatile data storage device mapped to the destination physical address.

In a further implementation form of the first, second, third, and fourth aspects, the processing circuitry is further configured for implementing remote file-system queues.

Implementing the remote file system queues enables the processing circuitry of the NIC of the host to directly write to and/or directly read from the non-volatile data storage device of the host associated with the file system.

In a further implementation form of the first, second, third, and fourth aspects, the request is processed by the processing circuitry via a host interface direct memory access.

In a further implementation form of the first, second, third, and fourth aspects, the processor is configured to provide the request to a file-system interface defined by RDMA for establishing a reliable connection for data transfer across the network between the network node and the non-volatile data storage device of the host.

In a further implementation form of the first, second, third, and fourth aspects, the request indicates a new SWR mapped to a SWR defined by RDMA selected from a group consisting of: fopen(), fclose(), readv(),writev() and fseek().

Unless otherwise defined, all technical and/or scientific terms used herein have the same meaning as commonly understood by one of ordinary skill in the art to which the disclosure pertains. Although methods and materials similar or equivalent to those described herein can be used in the practice or testing of embodiments of the disclosure, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the disclosure are herein described, by way of example only, with reference to the accompanying drawings. With specific reference now to the drawings in detail, it is stressed that the particulars shown are by way of example and for purposes of illustrative discussion of embodiments of the disclosure. In this regard, the description taken with the drawings makes apparent to those skilled in the art how embodiments of the disclosure may be practiced.

In the drawings:
FIG. 1 is a block diagram of components of a system for data transfer across a network between a network node and non-volatile data storage device of a host, in accordance with some embodiments;
FIG. 2 is a flowchart of a method of data transfer across a network between a network node and non-volatile data storage device of a host, in accordance with some embodiments;
FIG. 3 is a schematic depicting a process for remote access transaction with a remote file-system scenario using standard NFS approaches, to help understand some embodiments;
FIG. 4 is a schematic depicting a process for remote access transaction, in accordance with some implementations;
FIG. 5 is a schematic depicting an incoming packet for a traditional RDMA write operation, to help understand some embodiments;
FIG. 6 is a schematic depicting an adapted packet for remote access transaction, in accordance with some implementations;
FIG. 7 is a schematic depicting an adapted packet to illustrate an example of directly writing into a non-volatile data storage device of a host, in accordance with some embodiments; and
FIG. 8 is a schematic depicting an adapted packet to illustrate an example of opening a remote file, in accordance with some embodiments.

### DETAILED DESCRIPTION

The present disclosure, in some embodiments thereof, relates to transfer of data over a network and, more specifically, but not exclusively, to a network interface card, systems, and methods, for transferring data over a network between computing devices.

An aspect of some embodiments relates to a network interface card (NIC), systems, methods, a computing device and/or apparatus, and/or computer program product (storing code instructions executable by one or more processors) for data transfer across a network between a host and a network node. On the server-side (also referred to herein as *host*), file-system internal structures of the host, used for management of data stored on a non-volatile data storage device of the host, are cached on a memory of a NIC of the host. A packet(s) is received from a client (also referred to herein as *network node*)*.* A request is extracted from the packet. The request includes an operation command for performing operations on data stored on the non-volatile data storage device of the host defined by the file-system, for example, data transfer across the network between the non-volatile data storage device of the host defined by the file-system and the network node. The request is executed by processing circuitry of the NIC according to the file-system internal structures which are stored in the memory of the NIC, for example, data is transferred across the network between the network node and the non-volatile data storage device of the host. The request is executed by the processing circuitry of the NIC, without processing by a central processing unit (CPU) of the host (apart from some possible operations during an initialization process). On the client-side, a processor of the network node generates the packet with the request, and sends the packet including the request to the NIC of the host. The request may be provided to a file-system interface defined by RDMA for establishing a reliable connection for data transfer across the network between the network node and the non-volatile data storage device of the host.

Latency of the data transfer between the remote network node and the non-volatile data storage device of the host is reduced compared to standard approaches where data is first transferred between a volatile data storage device of the host (e.g., memory), for example, using RDMA, and then the CPU of the host transfers to the data from the memory of the host to the non-volatile data storage device of the host.

The latency is reduced by storing the file system internal structures of the host on the memory of the NIC, which enables the processing circuity of the NIC to directly read/write between the non-volatile data storage device of the host and the remote network node, rather than by the CPU of the host transferring data between a memory of the host (e.g., directly accessed via RDMA) and the non-volatile data storage device of the host.

Based on the assumption that the data structure of the file system is not overly complex, the additional workload overload introduced to the processing circuitry of the NIC does not significantly impact the performance of the processing circuitry of the NIC, even when the additional workload is not being performed by the CPU of the host.

Before explaining at least one embodiment of the disclosure in detail, it is to be understood that the disclosure is not necessarily limited in its application to the details of construction and the arrangement of the components and/or methods set forth in the following description and/or illustrated in the drawings and/or the Examples. The disclosure is capable of other embodiments or of being practiced or carried out in various ways.

The present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing.

Computer readable program instructions described herein can be downloaded to respective computing/processing devices from a computer readable storage medium or to an external computer or external storage device via a network, for example, the Internet, a local area network, a wide area network and/or a wireless network.

The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

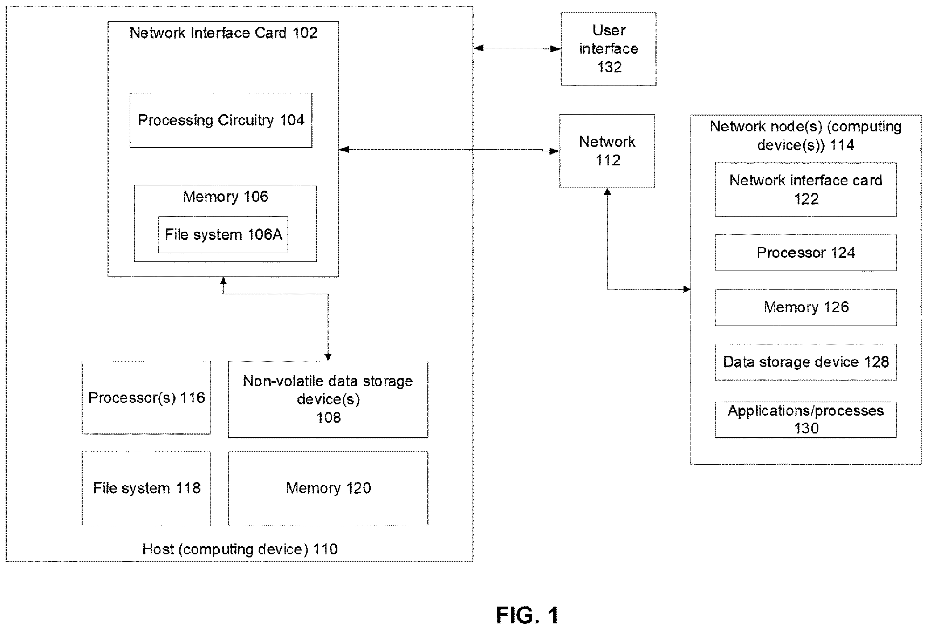

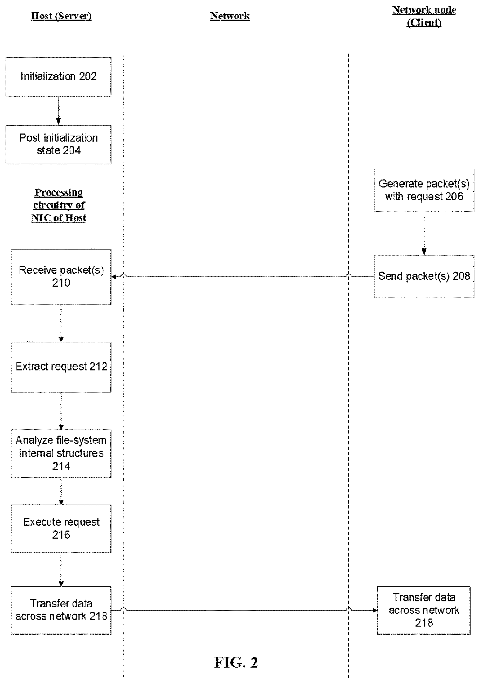

Reference is also made to FIG. 1, which is a block diagram of components of a system 100 for data transfer across a network between a network node and non-volatile data storage device of a host, in accordance with some embodiments. Reference is also made to FIG. 2, which is a flowchart of a method of data transfer across a network between a network node and non-volatile data storage device of a host, in accordance with some embodiments.

System 100 may implement the acts of the method described with reference to FIG. 2-8 by a network interface card 102 of a host 110 that includes processing circuitry 104 and a memory 106 storing a file system 106A internal structures of host 110 for management of data stored on a data storage device (108) (optionally non-volatile storage) of host 110, for example, a hard drive, and/or solid state drive (SSD). The file system 106A internal structures may include, for example, a file allocation table(s).

Host computing device 110 connects to a network 112 via NIC 102, for connecting to one or more network node computing devices 114. Data is transferred between data storage device 108 of host 110 and network node(s) 114, for example, network node(s) 114 may transfer files for storage on data storage device 108 of host 110 and/or network node(s) 114 may obtain files stored on data storage device 108 of host 110.

Host 110 may represent a server, and node(s) 114 may represent client(s), although it is understood that in some implementations host 110 may act as a client and/or node 114 may act as a server.

Host computing device 110 further includes one or more processors 116. As described herein, data transfer between data storage device 108 of host 110 and network node(s) 114 occurs without using processor 116 of host 110. It is noted that processor 116 of host 110 may initialize the setup where its file system 118 is provided as file system 106 for use by processing circuitry 104 of NIC 102, as described herein.

Host computing device 110 may further include a memory (e.g. volatile) 120, for example, random access memory (RAM).

Network node(s) 114 may each include a NIC 122, a processor(s) 124, a memory 126, a data storage device 128, and/or applications and/or executing processes 130 stored on memory 126 and/or data storage devices 128. Applications and/or executing processes 130 may send instructions to NIC 102 over network 112 instructing direct operations on files stored on data storage device 108 of host 110 (e.g., open file, close file, read file, write file, seek file) without necessarily involving processor(s) 116 of host 110, as described herein. It is noted that network node(s) 114 may include an instance of NIC 102, rather than NIC 122, such as to enable the respective network node(s) 114 to provide the functionality described herein with reference to NIC 102 to other nodes (e.g., when node(s) 114 act as a server(s) to other clients(s)).

Host 110 and/or network node(s) 114 may be implemented as, for example, one or more of: a computing cloud, a single computing device (e.g., client terminal), a group of computing devices arranged in parallel, a network server, a local server, a remote server, a client terminal, a mobile device, a stationary device, a kiosk, a smartphone, a laptop, a tablet computer, a wearable computing device, a glasses computing device, a watch computing device, and a desktop computer.

Processor(s) 116 and/or 124, may be implemented as for example, central processing unit(s) (CPU), graphics processing unit(s) (GPU), field programmable gate array(s) (FPGA), digital signal processor(s) (DSP), application specific integrated circuit(s) (ASIC), customized circuit(s), processors for interfacing with other units, and/or specialized hardware accelerators. Processor(s) 116 and/or 124 may be implemented as a single processor, a multicore processor, and/or a cluster of processors arranged for parallel processing (which may include homogenous and/or heterogeneous processor architectures).

Memory 106 and/or 120 and/or 126 is optionally implemented as volatile memory, for example, RAM.

Data storage device 108 and/or 128 is optionally implemented as non-volatile memory, for example, a hard disk drive, and/or SSD.

Network 112 may be, for example, the internet, a local area network, a virtual network, a wireless network, a cellular network, a local bus, a point to point link (e.g., wired), and/or combinations of the aforementioned.

Host 110 and/or network node 114 may include and/or be in communication with one or more physical user interfaces 132 that include a mechanism for user interaction, for example, to enter data (e.g., select file for copying) and/or to view data (e.g., results indicating success of the copying). Exemplary physical user interfaces 132 include, for example, one or more of, a touchscreen, a display, gesture activation devices, a keyboard, a mouse, and voice activated software using speakers and microphone.

Referring now back to FIG. 2, at 202, an initialization process of a file-system of a host is implemented. The host acts as a server, providing data transfer, read, write, and/or other services to one or more remote clients, also referred to herein as network nodes.

The processing circuitry of the NIC of the host mounts the file-system of the host. The file-system of the host is for management of data stored on the non-volatile data storage device installed on the host. The file-system internal structures may be installed on the host system bus, for example, peripheral component interconnect express (PCIe) interface. The processing circuitry caches internal structures of the file-system, for example, file-allocation data structures, on the memory (e.g., RAM) of the NIC. The complete file system is obtained by the processing circuitry of the NIC and locally stored on the memory of the NIC, enabling direct read/write to the non-volatile storage of the host without the CPU of the host.

The processing circuitry of the NIC may have the complete shadow of the file-system internal structures and/or the file-system implementation on its internal memory.

The processing circuitry of the NIC of the host may be set up to implement remote file-system queues. Implementing the remote file system queues enables the processing circuitry of the NIC of the host to directly write to and/or directly read from the non-volatile data storage device of the host associated with the file system.

At 204, following the initialization process, a post initialization state is created where the processing circuitry of the NIC of the host manages the file-system of the host, and/or services read and/or write requests by other nodes on the network. The file-system of the host stored on the memory of the NIC may be exclusively managed by the processing circuitry of the NIC, while the file-system of the host installed on the host may be placed in a state in which other processes, such as the CPU of the host are prevented from accessing the file-system of the host installed on the host. Access to the file-system of the host is blocked following the initialization process. The host CPU blocks the file-system write-access following initialization to prevent access collisions.

At 206, a packet(s) including a request is generated by a network node. The network node acts as a client, which obtains services from the host acting as a server.

The packet may be generated, for example, by the CPU of the network node, and/or by processing circuity of the NIC of the network node.

The request is for performing an operation on data stored on a non-volatile data storage device of the host (e.g., hard drive, solid state drive). The operation is performed by the processing circuitry of the NIC of the host according to the file-system of the host cached on the memory of the NIC. The request may be an operation command indicating directly reading data from a file on the file-system over the non-volatile data storage device installed on the host, and sending the read data to the network node over the network. Alternatively or additionally, the request may be an operation command for receiving data from the network node sent over the network, and directly writing the received data to a file on the file-system over the non-volatile data storage device installed on the host. A technical problem that exists in current RDMA implementation is that the remote network node needs to know the exact pointer to the memory address of the memory of the host in order to be able to read from or write to. As the pointers are highly dynamic and cannot be easily determined by the remote network node, the requirement to know the location of the pointer is an obstacle for implementing a high performance remote file-systems over the network (e.g., using RDMA). Caching the file system internal structures in the memory of the NIC enables using the NIC as a bridge to the file system, which does not require that that the remote network node know pointers to the memory address, enabling implementation of low latency and/or high performance data transfers over the network.

The request may be for data transfer across the network, where data is directly transferred between the non-volatile data storage device of the host, via the processing circuitry of the NIC of the host, and the network node. The data transfer may be according to, for example, RDMA, a network file-system (NFS) protocol, and/or other data transfer protocols. Standard RDMA is extended, by providing the capability to directly perform data transfer between the remote network node and the non-volatile data storage device of the host. Standard RDMA enables only performing data transfer between the remote network node and the volatile data storage device of the host (e.g., memory), with the CPU of the host performing the additional transfer of data between the memory of the host and the non-volatile data storage device of the host. In implementations described herein, the CPU of the host does not participate in the data transfer. The processing circuitry of the NIC of the host performs the data transfer without involving the CPU of the host.

The operation command, also referred to herein as send work request (SWR) enable the remote network node to remotely read/write directly to the non-volatile data storage device of the host, for example for a low level client network file system (NFS) implement at the remote side (e.g., for portable operating system interface (POSIX) application programming interface (API) usage). The operation commands are used instead of the traditional pointers. The SWRs trigger the NIC on the host to perform a more complex job than just write to the remote memory of the host.

The request may include instructions for remotely performing an operation on a file stored on the non-volatile data storage device of the host, for example, file open, file close, read file, write file, and file seek via a file-system interface. Operations may be directly and remotely performed by the network node on the non-volatile data storage device of the host.

The request may be for data transfer across the network indicates file granularity. The request enables remote access by file granularity rather than memory granularity.

The request may indicate a new SWR (Send Work Request) opcode. The new SWR opcode may be simple RDMA SWR opcodes which are provided to the remote network node. The remote network node doesn't need to save a complex remote memory context, as is required using standard approaches. Offsets to the non-volatile data storage device of the host are not required.

The request may define a new reliable connection RDMA send work request (SWR) for providing POSIX file functionality to the network node for directly and remotely performing on the host. The new RDMA protocol SWRs may improve high performance computing (HPC) applications file-systems access latency significantly, which is an important parameter in HPC.

The request may indicate instructions to open a file on the non-volatile data storage device of the host. The packet may include a filename field indicating a filename of the file to open, and a path field indicating a path of the file to open. In response to executing the request, the processing circuitry provides a response packet to the network node indicating a handle of the opened file. The packet may include a data field indicating encoding of parameters of the POSIX fopen() operation similar to the NFS protocol.

The request may indicate a new SWR mapped to a SWR defined by RDMA, for example, fopen(), fclose(), readv(),writev() and fseek(). The new SWR opcode may be, for example: fopen() maps to RDMA_SWR_REMOTE_FOPEN [opcode<7-0>=00011000], fclose() maps to RDMA_SWR_REMOTE_FCLOSE [opcode<7-0>=00011001], readv() maps to RDMA_SWR_REMOTE_READV, [opcode<7-0>=00011010], writev() maps to RDMA_SWR_REMOTE_WRITEV [opcode<7-0>=00011011], fseek() maps to RDMA_SWR_REMOTE_FSEEK [opcode<7-0>=00011100].

The request may indicate instructions to read a file and/or write a file on the non-volatile data storage device of the host. The packet may include a remote file handle indicating a handle of the file, and/or a memory key field indicating memory offset of the file. The non-volatile data storage device may be mapped to a certain address in physical memory of the host. The processing circuitry computes a destination physical address for reading and/or writing the file. An exemplary process for computing the destination physical address is now described. The processing circuitry sets a file base offset value of the file in the non-volatile data storage device of the host. The file base is obtained by scanning the file-system internal data structures (e.g., file allocation table structures) which are cached in the memory of the NIC according to the handle of the file and/or the memory offset of the file in the packet. An offset value set is obtained by an application on the network node that sent the packet. A destination physical address of the requested file data on the non-volatile data storage device is computed by using the equation: destination virtual address - base virtual address + base physical address + the offset value. The non-volatile data storage device mapped to the destination physical address is written to and/or read from.

At 208, the packet including the request is sent from the network node to the NIC of the host. The packet with request is sent for execution by the processing circuity of the NIC of the host.

The network node (e.g., processor thereof) may provide the packet with request to a file-system interface defined by RDMA (e.g., standard Portable Operating System Interface (POSIX) file-system interface, such as an API) for establishing a reliable connection for data transfer across the network between the network node and the non-volatile data storage device of the host.

At 210, the NIC of the host receives the packet with request from the network node.

At 212, the request is extracted from the packet. The request may be for data transfer across the network between the non-volatile data storage device of the host defined by the file-system and the network node, such as for reading from the non-volatile data storage device, and/or writing to the non-volatile data storage device, and/or other operations such as file open, as described herein.

At 214, the processing circuitry of the NIC of the host may analyze the file-system internal structures cached on the memory of the NIC to find a location on the non-volatile data storage device of the host for servicing the request, including read from a file and/or writing into a file. In existing approaches, for example, on NVMe-Direct, the network node accessing the host is required to know the address of the data it needs to write to as used. Using the new SWRs and the file system internal structures stored on the memory of the NIC absolves the network node of the previous requirement to know the address of the data. The file system internal structures, which are cached on the memory of the NIC, are used to find the location on the non-volatile data storage device of the host for implementing the request, rather than using the CPU of the host and the file system internal structures stored on the non-volatile memory of the host, which reduces latency (otherwise incurred by the delays due to using the CPU of the host) and/or improves utilization efficiency of the CPU of the host.

The file-system may be analyzed for allocating an amount of space for writing data received from the network node on the non-volatile data storage device, and/or for fetching a physical address of the file with offset over the non-volatile data storage device for reading/writing data, servicing the request. The processing circuitry of the NIC analyzes the file system instead of the CPU of the host, optionally in a similar manner. Analyzing the file system by the processing circuitry of the NIC rather than by the CPU of the host reduces latency otherwise incurred by using the CPU of the host, and/or improves performance of the CPU of the host by off-loading the analysis task to the processing circuitry of the NIC.

At 216, the request is executed by the processing circuitry of the NIC of the host.

The request (e.g., for transferring data across the network between the network node and the non-volatile data storage device of the host, opening files, and the like) may be executed according to the file-system internal structures which are stored in the memory of the NIC.

The request (e.g., transferring of the data, opening files, and the like) is performed by the processing circuitry optionally by excluding processing by the CPU of the host. The host CPU is not necessarily involved in file-system operations (e.g., besides the initialization process), which increases efficiency of the host CPU (i.e., available to process other tasks of the host) and/or reduces latency of the data transfer, i.e., by directly reading from/writing to the non-volatile data storage device of the host without incurring delays due to processing by the host CPU.

The request may be processed by the processing circuitry of the NIC of the host via a host interface direct memory access. Implementing the remote file system queues enables the processing circuitry of the NIC of the host to directly write to and/or directly read from the non-volatile data storage device of the host associated with the file system.

At 218, data is transferred across the network between the NIC of the host and the network node that sent the request. The data transfer may be performed according to the RDMA protocol and/or NFS protocol.

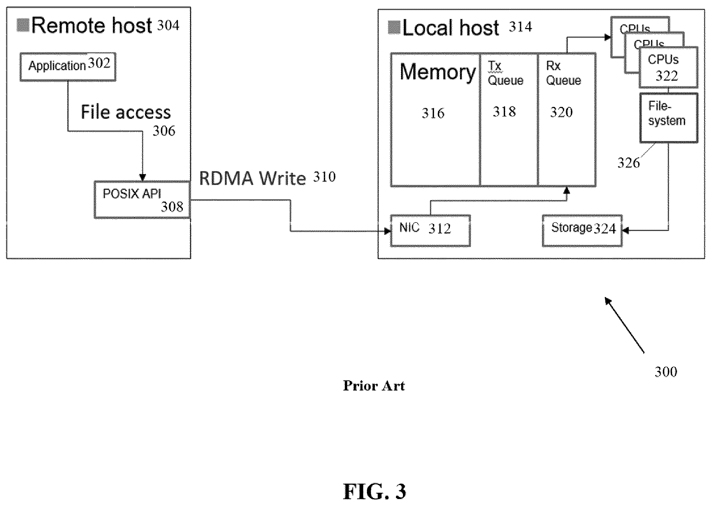

Reference is now made to FIG. 3, which is a schematic 300 depicting a process for remote access transaction with a remote file-system scenario using standard NFS approaches, to help understand some embodiments. Using standard approaches, an application 302 of a remote host 304 initiates remote file access 306 via a standard POSIX API 308, for example, RDMA Write 310. The RDMA Write 310 request is received by a NIC 312 of a local host 314. RDMA is used to access a memory 316 of host 314, including Tx Queue 318 and/or Rx Queue 320. One or more CPUs 322 of host 314 access a non-volatile storage device 324 according to a file-system 326 of host 304 in order to perform the write operation initiated by application 302. Using traditional approaches, CPU 322 of host 314 and/or memory 316 of host 314 is/are involved for accessing storage 324, which incurs additional delays in execution of the RDMA operation, as described herein.

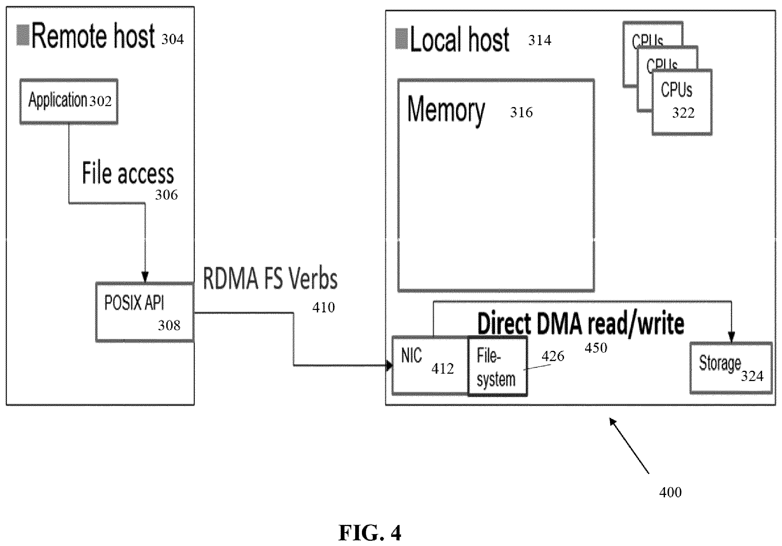

Reference is now made to FIG. 4, which is a schematic 400 depicting a process for remote access transaction, in accordance with some implementations. Schematic 400 represents an adaption of existing approaches described with reference to schematic 300, to help understand implementations described herein. Application 302 of remote host 304 initiates remote file access 306 via standard POSIX API 308, using a new SWR described herein (i.e., FS Verbs). NIC 412 of host 314 stores file-system 426 thereon (e.g., on a RAM of NIC 412). File-system 426 is the software implementation of file system 326 on the host non-volatile storage device 324, including the cache of its internal structures, where access to file system 326 is blocked. Storage 324 of host 314 is directly accessed 450 (e.g., using direct memory access (DMA) to perform the SWR initiated by application 302. It is noted that storage 324 is directly access by NIC 412, bypassing involvement of memory 316 of host 314 and/or CPU 322 of host 314.

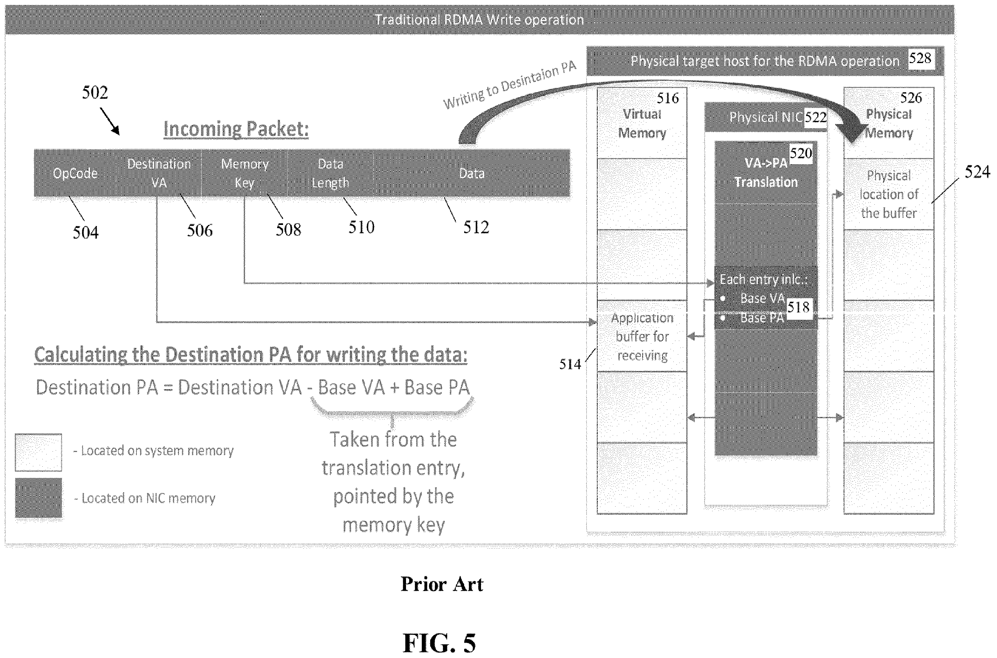

Reference is now made to FIG. 5, which is a schematic depicting an incoming packet 502 for a traditional RDMA write operation, to help understand some embodiments. Packet 502 includes the following fields: opcode 504, destination virtual address (VA) 506, memory key 508, data length 510, and data 512 (to be written). Destination VA 506 maps to an application buffer for receiving 514 stored on a virtual memory located on a memory of a host 528. Memory key 508 maps to entries 518 defined by a VA to physical address (PA) translation 520 stored on a memory of the NIC 522. Each entry includes a base VA and base PA. Each entry maps between virtual memory 516 and physical locations (e.g. of the buffer) 524 of a physical memory 526 located on the memory of the host 528. A destination PA for writing data located in data field 512 of packet 502 is computed as destination VA - Base VA + Base PA, where base VA and base PA are taken from translation entry 518 pointed by the memory key 508 of packet 502.

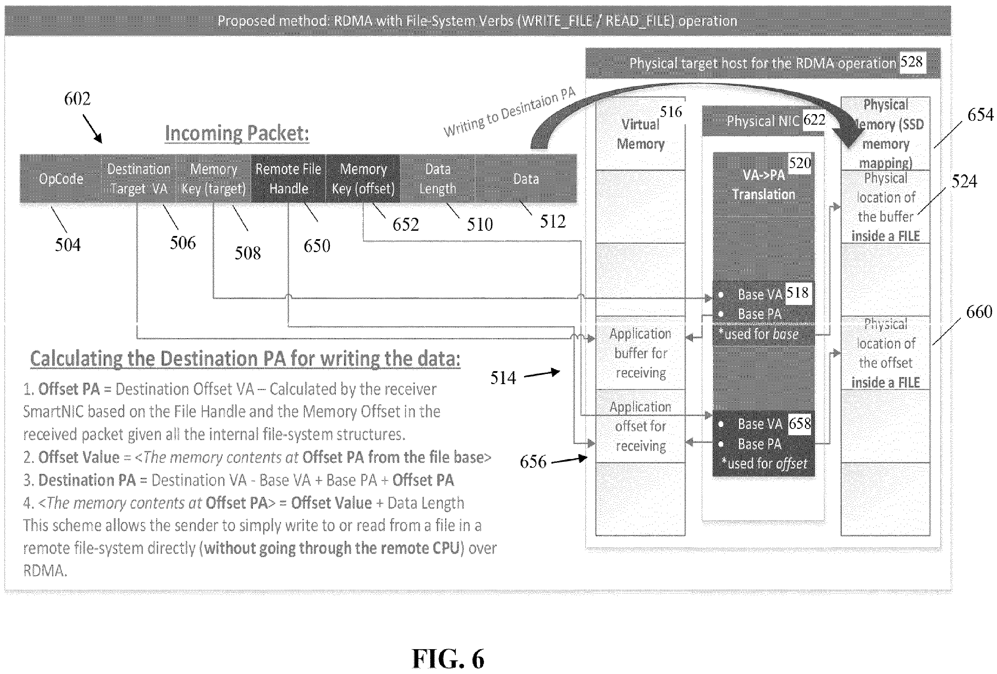

Reference is now made to FIG. 6, which is a schematic depicting an adapted packet 602 for remote access transaction, in accordance with some implementations. Packet 602 represents an adaption of standard packet 502 as described with reference to FIG. 5, to enable the new SWR operations, optionally implemented based on RDMA, as described herein. For clarity, adaptations start with the numeral '6' and are discussed herein. Existing components start with the numeral '5' and were discussed with reference to FIG. 5. Existing components are used for the base address, where the new adapted components are used or the offset address within data (e.g., file). Packet includes a remote file handle field 650 indicating a handle of the file, and a memory key (offset) field 652 indicating memory offset of the file. A non-volatile data storage device, i.e., physical memory (e.g., SSD memory mapping) 654 of host 528 is mapped to a certain address in physical memory of the host 528. Remote file handle 650 is mapped to an application offset for receiving field 656. Memory key (offset) field 652 is mapped to a Base VA Base PA translation entry 658 used for offset, that maps between application offset for receiving field 656 and physical location of the offset inside a file 660 of physical memory 654.

The destination physical address for reading and/or writing data stored in data field 512 is computed as follows. An offset PA is obtained by translating the destination offset VA. NIC 622 of host 528 computes the destination offset VA by scanning the file-system internal data structures which are cached in the memory of the NIC according to the handle of the file 650 and the memory offset 652 of the file in the packet 602. An offset value defines the memory contents at the offset PA from the file base. A destination physical address of the requested file data on the non-volatile data storage device is computed by using the equation: destination VA - base VA + base PA + the offset value. The memory contents at Offset PA stores the offset value + data length. Using the data structures and/or mappings described with reference to FIG. 6, a sender may use RDMA to directly read and/or write a file stored on a data storage device of a host defined by a file-system of the host, without going through the host CPU.

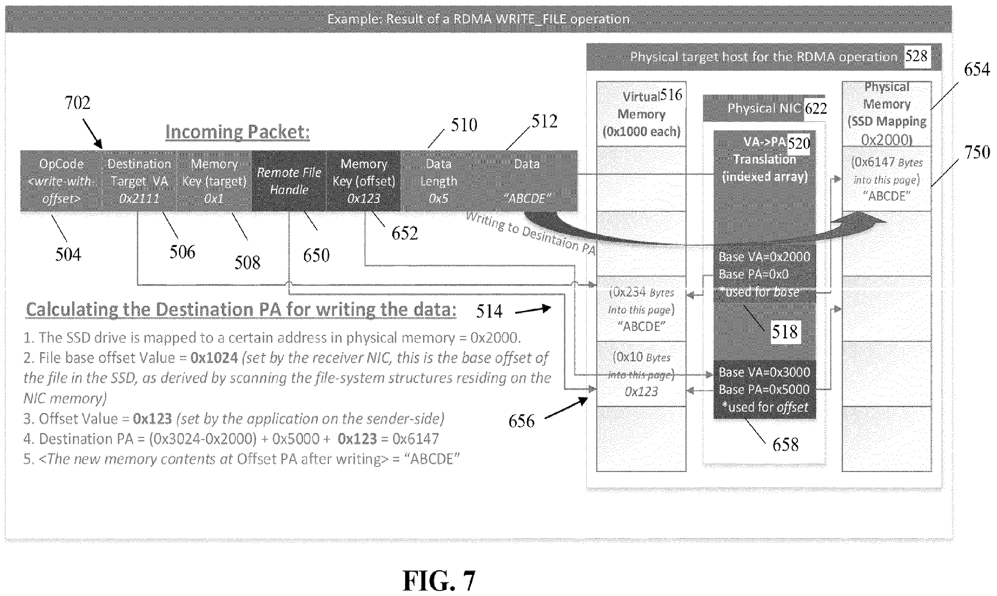

Reference is now made to FIG. 7, which is a schematic depicting an adapted packet 702 to illustrate an example of directly writing into a non-volatile data storage device 654 of host 528, in accordance with some embodiments. Packet 702 and other components are based on packet 602 and other components described with reference to FIG. 6, with specific examples of using RDMA write file operation. Opcode field 502 stores a new SWR indicating write with offset. Destination Target VA 506 stores 0x2111. Memory key (target) field 508 sores 0x1. Memory key (offset) field 652 stores 0x123. Data length field 510 stores 0x5. Data field 512 stores ABCDE, which is written to 0x6147 byes on page 750.

SSD drive 654 is mapped to a certain address in physical memory = 0x2000. File base offset value = 0x1024, which is set by the NIC of the host. File base offset value is the base offset of the file in the SSD, as derived by scanning the file-system structures residing on the NIC memory. Offset value = 0x123, which is set by the application on the node (i.e., sender-side). Destination VA = (0x3024 - 0x2000) + 0x5000 + 0x123 = 0x6147. The new memory contents at offset PA after writing are set to ABCDE.

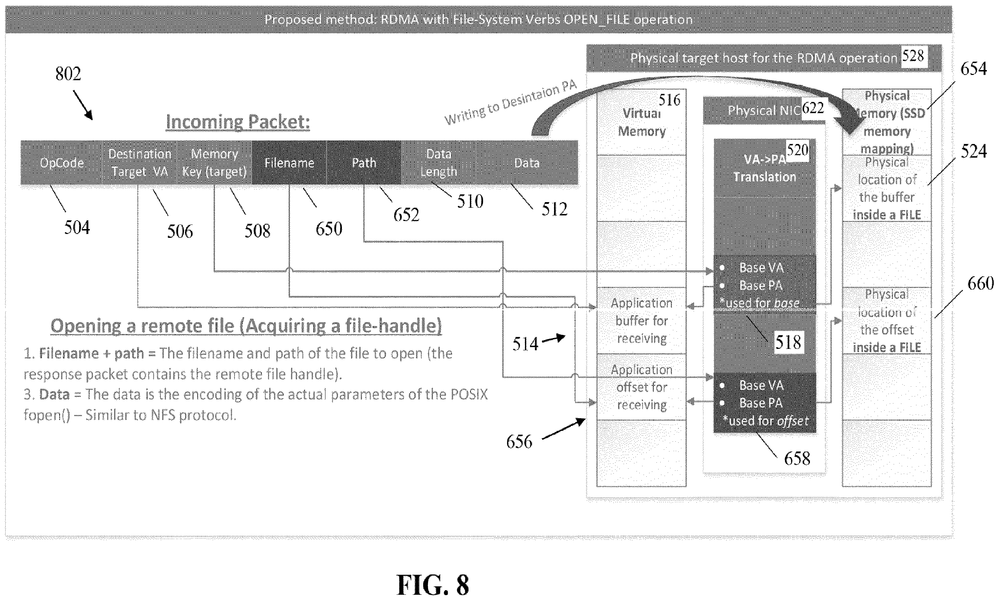

Reference is now made to FIG. 8, which is a schematic depicting an adapted packet 802 to illustrate an example of opening a remote file, in accordance with some embodiments. Packet 802 and other components are based on packet 602 and other components described with reference to FIG. 6, with specific examples of using RDMA to open a remote file for acquiring a file-handle. The filename and path of the file to open are provided in packet 802. A response packet sent from the host to the node includes the remote file handle. Data stored in field 512 is the encoding of the actual parameters of the POSIX fopen() operation described herein, which may be an adaptation of the NFS protocol.

Other systems, methods, features, and advantages of the present disclosure will be or become apparent to one with skill in the art upon examination of the following drawings and detailed description.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

It is expected that during the life of a patent maturing from this application many relevant NICs will be developed and the scope of the term NIC is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the disclosure may include a plurality of "optional" features unless such features conflict.

Throughout this application, various embodiments of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the disclosure, which are, for clarity, described in the context of separate embodiments, may also be provided in combination in a single embodiment. Conversely, various features of the disclosure, which are, for brevity, described in the context of a single embodiment, may also be provided separately or in any suitable subcombination or as suitable in any other described embodiment of the disclosure. Certain features described in the context of various embodiments are not to be considered essential features of those embodiments, unless the embodiment is inoperative without those elements.

## Claims

1. A network interface card, NIC, (102) of a host (110) for data transfer across a network (112), comprising:
a memory (106) for caching file-system (106A) internal structures of the host for management of data stored on a non-volatile data storage device (108) of the host;
processing circuitry (104) configured for:
receiving a packet from a network node (114);
extracting from the packet, a request for data transfer across the network between the non-volatile data storage device of the host defined by the file-system and the network node; and
executing the request for transferring data across the network between the network node and the non-volatile data storage device of the host according to the file-system internal structures which are stored in the memory of the NIC; and
**characterized in that** the transferring of the data is performed by the processing circuitry and excluding processing by a central processing unit, CPU, of the host.

2. The network interface card of claim 1, wherein the request executed by the processing circuitry of the NIC comprises an operation command indicating at least one of: (i) directly reading data from a file on the file-system from the non-volatile data storage device installed on the host, and sending the read data to the network node over the network, and (ii) receiving data from the network node sent over the network, and directly writing the received data to a file on the file-system to the non-volatile data storage device installed on the host.

3. The network interface card of any of the previous claims, wherein the request for data transfer across the network indicates file granularity.

4. The network interface card of any of the previous claims, wherein the request comprises instructions for remotely performing an operation on a file stored on the non-volatile data storage device of the host, the request selected from a group consisting of: file open, file close, read file, write file, and file seek via a file-system interface.

5. The network interface card of any of the previous claims, wherein the processing circuitry is further configured to perform an initiation process of the file-system, by mounting the file-system of the host stored on the non-volatile data storage device installed on the host and caching internal structures of the file-system including file-allocation data structures on the memory of the NIC.

6. The network interface card of claim 5, wherein following the initialization process, the processing circuitry of the NIC is configured to manage the file-system of the host and to service read and write requests by other nodes on the network, wherein access to the file-system of the host is blocked following the initialization process.

7. The network interface card of any of the previous claims, wherein the processing circuitry is configured for analyzing the file-system internal structures cached on the memory of the NIC to find a location on the non-volatile data storage device of the host for servicing the request including reading from a file and/or writing into a file.

8. The network interface card of claim 7, wherein the file-system is analyzed for at least one of: allocating an amount of space for writing data received from the network node on the non-volatile data storage device, and fetching a physical address of the file with offset from the non-volatile data storage device for reading/writing data, and servicing the request.

9. The network interface card of any of the previous claims, wherein the data transfer across the network is according to at least one of: a Remote Direct Memory Access, RDMA, protocol, and a network file-system, NFS, protocol.

10. The network interface card of claim 9, wherein the request indicates a new Send Work Request, SWR, opcode.

11. The network interface card of any of the previous claims, wherein the request indicates instructions to open a file on the non-volatile data storage device of the host, wherein the packet includes a filename field indicating a filename of the file to open, a path field indicating a path of the file to open,
wherein in response to executing the request, the processing circuitry is configured to provide a response packet to the network node indicating a handle of the opened file.

12. A processor (124) of a network node (114) for data transfer across a network (112) to a host (110), wherein the processor is configured for:
generating a packet including a request to perform an operation on data stored on a non-volatile data storage device (108) of the host by processing circuitry (104) of a NIC (102) of the host according to a file storage system (106A) of the host cached on the memory (106) of the NIC; and
sending the packet including the request to the NIC of the host for execution by the processing circuity of the NIC of the host excluding processing by a central processing unit, CPU, of the host.

13. The processor of claim 12, wherein the processor is configured to provide the request to a file-system interface defined by RDMA for establishing a reliable connection for data transfer across the network between the network node and the non-volatile data storage device of the host.

14. A method for data transfer across a network by a network interface card, NIC, of a host, comprising:
receiving a packet from a network node (210);
extracting from the packet, a request for data transfer across the network between a non-volatile data storage device of the host defined by a file-system for management of data stored on the non-volatile data storage device of the host, and the network node (212),
wherein the file-system internal structures of the non-volatile data storage device installed on the host system bus is cached on a memory which is local to the NIC; and
executing the request for transferring data across the network between the network node and the non-volatile data storage device of the host according to the file-system internal structures stored in the memory of the NIC (216); and
**characterized in that** the transferring of the data is performed by the processing circuitry and excluding processing by a central processing unit, CPU, of the host.

## Patentansprüche

1. Netzwerkschnittstellenkarte, NIC, (102) eines Hosts (110) zur Datenübertragung über ein Netzwerk (112), umfassend:
einen Speicher (106) zum Cachen von internen Strukturen des Dateisystems (106A) des Hosts zur Verwaltung von Daten, die auf einer nichtflüchtigen Datenspeichervorrichtung (108) des Hosts gespeichert sind;
eine Verarbeitungsschaltung (104), die zu Folgendem konfiguriert ist:
Empfangen eines Pakets aus einem Netzwerkknoten (114);
Extrahieren einer Anforderung zur Datenübertragung über das Netzwerk zwischen der nichtflüchtigen Datenspeichervorrichtung des durch das Dateisystem definierten Hosts und dem Netzwerkknoten aus dem Paket; und
Ausführen der Anforderung zum Übertragen von Daten über das Netzwerk zwischen dem Netzwerkknoten und der nichtflüchtigen Datenspeichervorrichtung des Hosts gemäß den internen Strukturen des Dateisystems, welche in dem Speicher der NIC gespeichert sind; und
**dadurch gekennzeichnet, dass** das Übertragen der Daten durch die Verarbeitungsschaltung und das Ausschließen einer Verarbeitung durch eine zentrale Verarbeitungseinheit, CPU, des Hosts durchgeführt wird.

2. Netzwerkschnittstellenkarte nach Anspruch 1, wobei die Anforderung, die durch die Verarbeitungsschaltung der NIC ausgeführt wird, einen Operationsbefehl umfasst, der mindestens eines des Folgenden angibt: (i) direktes Lesen von Daten aus einer Datei in dem Dateisystem von der auf dem Host installierten nichtflüchtigen Datenspeichervorrichtung und Senden der gelesenen Daten über das Netzwerk an den Netzwerkknoten, und (ii) Empfangen von über das Netzwerk gesendeten Daten von dem Netzwerkknoten und direktes Schreiben der empfangenen Daten in eine Datei in dem Dateisystem der auf dem Host installierten nichtflüchtigen Datenspeichervorrichtung.

3. Netzwerkschnittstellenkarte nach einem der vorhergehenden Ansprüche, wobei die Anforderung zur Datenübertragung über das Netzwerk die Dateigranularität angibt.

4. Netzwerkschnittstellenkarte nach einem der vorhergehenden Ansprüche, wobei die Anforderung Anweisungen zum Ferndurchführen einer Operation an einer Datei umfasst, die auf der nichtflüchtigen Datenspeichervorrichtung des Hosts gespeichert ist, die Anforderung aus einer Gruppe bestehend aus Folgendem ausgewählt wird: Datei öffnen, Datei schließen, Datei lesen, Datei schreiben und Datei suchen über eine Dateisystemschnittstelle.

5. Netzwerkschnittstellenkarte nach einem der vorhergehenden Ansprüche, wobei die Verarbeitungsschaltung ferner dazu konfiguriert ist, einen Initialisierungsprozess des Dateisystems durch Montieren des Dateisystem des Hosts, das auf der nichtflüchtigen Datenspeichervorrichtung gespeichert ist, die auf dem Host installiert ist, und Cachen von internen Strukturen des Dateisystems durchzuführen, die Datenstrukturen zur Dateizuweisung auf dem Speicher der NIC beinhalten.

6. Netzwerkschnittstellenkarte nach Anspruch 5, wobei die Verarbeitungsschaltung der NIC nach dem Initialisierungsprozess dazu konfiguriert ist, das Dateisystem des Hosts zu verwalten und Lese- und Schreibanforderungen durch andere Knoten in dem Netzwerk zu bedienen,
wobei der Zugriff auf das Dateisystem des Hosts nach dem Initialisierungsprozess blockiert ist.

7. Netzwerkschnittstellenkarte nach einem der vorhergehenden Ansprüche, wobei die Verarbeitungsschaltung zum Analysieren der internen Strukturen des Dateisystems konfiguriert ist, die in dem Speicher der NIC gecacht sind, um einen Ort auf der nichtflüchtigen Datenspeichervorrichtung des Hosts zum Bedienen der Anforderung zu finden, die das Lesen aus einer Datei und/oder das Schreiben in eine Datei beinhaltet.

8. Netzwerkschnittstellenkarte nach Anspruch 7, wobei das Dateisystem für mindestens eines des Folgenden analysiert wird:
Zuweisen einer Speicherplatzmenge zum Schreiben von Daten, die aus dem Netzwerkknoten auf der nichtflüchtigen Datenspeichervorrichtung empfangen werden, und Abrufen einer physischen Adresse der Datei mit Versatz aus der nichtflüchtigen Datenspeichervorrichtung zum Lesen/Schreiben von Daten und Bedienen der Anforderung.

9. Netzwerkschnittstellenkarte nach einem der vorhergehenden Ansprüche, wobei die Datenübertragung über das Netzwerk gemäß mindestens einem der Folgenden erfolgt: Remote Direct Memory Access-Protokoll, RDMA-Protokoll, und Netzwerkdateisystemprotokoll, NFS-Protokoll.

10. Netzwerkschnittstellenkarte nach Anspruch 9, wobei die Anforderung einen neuen Opcode zum Senden einer Arbeitsanforderung, SWR-Opcode, angibt.

11. Netzwerkschnittstellenkarte nach einem der vorhergehenden Ansprüche, wobei die Anforderung Anweisungen zum Öffnen einer Datei auf der nichtflüchtigen Datenspeichervorrichtung des Hosts angibt, wobei das Paket ein Dateinamenfeld, das einen Dateinamen der zu öffnenden Datei angibt, und ein Pfadfeld beinhaltet, das einen Pfad der zu öffnenden Datei angibt,
wobei die Verarbeitungsschaltung als Reaktion auf das Ausführen der Anforderung dazu konfiguriert ist, dem Netzwerkknoten, der einen Handle der geöffneten Datei angibt, ein Antwortpaket bereitzustellen.

12. Prozessor (124) eines Netzwerkknotens (114) zur Datenübertragung über ein Netzwerk (112) an einen Host (110), wobei der Prozessor zu Folgendem konfiguriert ist:
Generieren eines Pakets, das eine Anforderung zum Durchführen einer Operation an Daten beinhaltet, die auf einer nichtflüchtigen Datenspeichervorrichtung (108) des Hosts gespeichert sind, durch eine Verarbeitungsschaltung (104) einer NIC (102) des Hosts gemäß einem Dateispeichersystem (106A) des Hosts, das in dem Speicher (106) der NIC gecacht ist; und
Senden des Pakets, das die Anforderung an die NIC des Hosts zur Ausführung durch die Verarbeitungsschaltung der NIC des Hosts beinhaltet, Ausschließen der Verarbeitung durch eine zentrale Verarbeitungseinheit, CPU, des Hosts.

13. Prozessor nach Anspruch 12, wobei der Prozessor dazu konfiguriert ist, einer durch RDMA definierten Dateisystemschnittstelle die Anforderung bereitzustellen, um eine zuverlässige Verbindung zur Datenübertragung über das Netzwerk zwischen dem Netzwerkknoten und der nichtflüchtigen Datenspeichervorrichtung des Hosts herzustellen.

14. Verfahren zur Datenübertragung über ein Netzwerk durch eine Netzwerkschnittstellenkarte, NIC, eines Hosts, umfassend:
Empfangen eines Pakets aus einem Netzwerkknoten (210);
Extrahieren einer Anforderung zur Datenübertragung über das Netzwerk zwischen einer nichtflüchtigen Datenspeichervorrichtung des Hosts, das durch ein Dateisystem zur Verwaltung von auf der nichtflüchtigen Datenspeichervorrichtung des Hosts gespeicherten Daten definiert ist, und dem Netzwerkknoten (212) aus dem Paket,
wobei die internen Strukturen des Dateisystems der auf dem Hostsystembus installierten nichtflüchtigen Datenspeichervorrichtung in einem Speicher gecacht werden, welcher lokal auf der NIC liegt; und
Ausführen der Anforderung zum Übertragen von Daten über das Netzwerk zwischen dem Netzwerkknoten und der nichtflüchtigen Datenspeichervorrichtung des Hosts gemäß den internen Strukturen des Dateisystems, die in dem Speicher der NIC (216) gespeichert sind; und
**dadurch gekennzeichnet, dass** das Übertragen der Daten durch die Verarbeitungsschaltung und das Ausschließen der Verarbeitung durch eine zentrale Verarbeitungseinheit, CPU, des Hosts durchgeführt wird.

## Revendications

1. Carte d'interface réseau, NIC, (102) d'un hôte (110) pour le transfert de données sur un réseau (112), comprenant :
une mémoire (106) pour la mise en cache des structures internes d'un système de fichiers (106A) de l'hôte pour la gestion de données stockées sur un dispositif de stockage de données non volatile (108) de l'hôte ;
un circuit de traitement (104) configuré pour :
recevoir un paquet provenant d'un nœud de réseau (114) ;
extraire du paquet, une demande de transfert de données sur le réseau entre le dispositif de stockage de données non volatile de l'hôte défini par le système de fichiers et le nœud du réseau ; et exécuter la demande de transfert de données sur le réseau entre le nœud de réseau et le dispositif de stockage de données non volatile de l'hôte selon les structures internes du système de fichiers qui sont stockées dans la mémoire de la NIC ; et
**caractérisée en ce que** le transfert des données est réalisé par le circuit de traitement et excluant le traitement par une unité centrale de traitement, CPU, de l'hôte.

2. Carte d'interface réseau selon la revendication 1, dans laquelle la demande exécutée par le circuit de traitement de la NIC comprend une commande d'opération indiquant au moins l'une des opérations suivantes : (i) la lecture directe de données à partir d'un fichier sur le système de fichiers à partir du dispositif de stockage de données non volatile installé sur l'hôte, et l'envoi des données lues au nœud de réseau sur le réseau, et (ii) la réception de données du nœud de réseau envoyées sur le réseau, et l'écriture directe des données reçues dans un fichier sur le système de fichiers sur le dispositif de stockage de données non volatile installé sur l'hôte.

3. Carte d'interface réseau selon l'une quelconque des revendications précédentes, dans laquelle la demande de transfert de données sur le réseau indique la granularité de fichier.

4. Carte d'interface réseau selon l'une quelconque des revendications précédentes, dans laquelle la demande comprend des instructions pour réaliser à distance une opération sur un fichier stocké sur le dispositif de stockage de données non volatile de l'hôte, la demande étant sélectionnée dans un groupe constitué de : une ouverture de fichier, une fermeture de fichier, une lecture de fichier, une écriture de fichier, et une recherche de fichier par le biais d'une interface de système de fichiers.

5. Carte d'interface réseau selon l'une quelconque des revendications précédentes, dans laquelle le circuit de traitement est également configuré pour réaliser un processus d'initiation du système de fichiers, en montant le système de fichiers de l'hôte stocké sur le dispositif de stockage de données non volatile installé sur l'hôte et en mettant en cache des structures internes du système de fichiers comportant des structures de données d'allocation de fichiers dans la mémoire de la NIC.

6. Carte d'interface réseau selon la revendication 5, dans laquelle après le processus d'initialisation, le circuit de traitement de la NIC est configuré pour gérer le système de fichiers de l'hôte et pour prendre en charge des demandes de lecture et d'écriture par d'autres nœuds sur le réseau, dans laquelle l'accès au système de fichiers de l'hôte est bloqué après le processus d'initialisation.

7. Carte d'interface réseau selon l'une quelconque des revendications précédentes, dans laquelle le circuit de traitement est configuré pour analyser les structures internes de système de fichiers mises en cache dans la mémoire de la NIC pour trouver un emplacement sur le dispositif de stockage de données non volatile de l'hôte pour prendre en charge la demande comportant la lecture à partir d'un fichier et/ou l'écriture dans un fichier.

8. Carte d'interface réseau selon la revendication 7, dans laquelle le système de fichiers est analysé pour au moins l'une des opérations suivantes : l'allocation d'une quantité d'espace pour l'écriture de données reçues du nœud de réseau sur le dispositif de stockage de données non volatile, et la récupération d'une adresse physique du fichier avec un décalage par rapport au dispositif de stockage de données non volatile pour la lecture/écriture de données, et la prise en charge de la demande.

9. Carte d'interface réseau selon l'une quelconque des revendications précédentes, dans laquelle le transfert de données sur le réseau est selon au moins l'un des protocoles suivants : un protocole d'accès direct à la mémoire à distance, RDMA, et un protocole de système de fichiers réseau, NFS.

10. Carte d'interface réseau selon la revendication 9, dans laquelle la demande indique un nouveau code d'opération d'envoi de demande de travail, SWR.

11. Carte d'interface réseau selon l'une quelconque des revendications précédentes, dans laquelle la demande indique des instructions pour ouvrir un fichier sur le dispositif de stockage de données non volatile de l'hôte, dans laquelle le paquet comporte un champ de nom de fichier indiquant un nom de fichier du fichier à ouvrir, un champ de chemin indiquant un chemin du fichier à ouvrir,
dans laquelle en réponse à l'exécution de la demande, le circuit de traitement est configuré pour fournir un paquet de réponse au nœud de réseau indiquant un handle du fichier ouvert.

12. Processeur (124) d'un nœud de réseau (114) pour le transfert de données à travers un réseau (112) vers un hôte (110), dans lequel le processeur est configuré pour :
générer un paquet comportant une demande de réalisation d'une opération sur des données stockées sur un dispositif de stockage de données non volatile (108) de l'hôte par un circuit de traitement (104) d'une NIC (102) de l'hôte selon un système de stockage de fichiers (106A) de l'hôte mis en cache dans la mémoire (106) de la NIC ; et
envoyer le paquet comportant la demande à la NIC de l'hôte pour exécution par le circuit de traitement de la NIC de l'hôte à l'exclusion du traitement par une unité centrale de traitement, CPU, de l'hôte.

13. Processeur selon la revendication 12, dans lequel le processeur est configuré pour fournir la demande à une interface de système de fichiers définie par RDMA pour établir une connexion fiable pour le transfert de données sur le réseau entre le nœud de réseau et le dispositif de stockage de données non volatile de l'hôte.

14. Procédé de transfert de données sur un réseau par une carte d'interface réseau, NIC, d'un hôte, comprenant :
la réception d'un paquet d'un nœud de réseau (210) ;
l'extraction du paquet, d'une demande de transfert de données à travers le réseau entre un dispositif de stockage de données non volatile de l'hôte défini par un système de fichiers pour la gestion de données stockées sur le dispositif de stockage de données non volatile de l'hôte, et le nœud de réseau (212),
dans lequel les structures internes de système de fichiers du dispositif de stockage de données non volatile installé sur le bus de système hôte sont mises en cache sur une mémoire qui est locale à la NIC ; et
l'exécution de la demande de transfert de données sur le réseau entre le nœud de réseau et le dispositif de stockage de données non volatile de l'hôte selon les structures internes de système de fichiers qui sont stockées dans la mémoire de la NIC (216) ; et
**caractérisé en ce que** le transfert des données est réalisé par le circuit de traitement et excluant le traitement par une unité centrale de traitement, CPU, de l'hôte.
